# EUROPEAN PATENT APPLICATION

(11) **EP 4 492 215 A1**
(43) Date of publication of application: **15.01.2025**
(21) Application number: 23795100.9
(22) Date of filing: 18.04.2023
(51) Int. Cl.: G06F 3/0488

(54) **DISPLAY METHOD, VEHICLE, AND ELECTRONIC DEVICE**

(30) Priority: 27.04.2022 CN 202210455944
(71) Applicant: Huawei Technologies Co., Ltd., Shenzhen, Guangdong 518129 (CN)
(72) Inventor: GUO, Kun, Shenzhen, Guangdong 518129 (CN)
(74) Representative: Maiwald GmbH
(86) International application number: PCT/CN2023/088884
(87) International publication number: WO 2023/207667

(57) **Abstract**

Embodiments of this application provide a display method, a vehicle, and an electronic device. In the technical solutions provided in embodiments of this application, the method includes: replacing a first mask on a plurality of layers of a home screen with a second mask in response to an operation of a user, where the second mask is used to block a target layer on which an image of a target application is displayed, to enable the home screen not to display an image of the target layer; performing a target operation on the target layer; and replacing the second mask with the first mask after the target operation performed on the target layer is completed, to enable the home screen to display the image of the target layer. In this way, color change timings of areas are consistent during style switching of the display, thereby improving user visual experience.

## Description

This application claims priority to Chinese Patent Application No. 202210455944.2, filed with the China National Intellectual Property Administration on April 27, 2022 and entitled "DISPLAY METHOD, VEHICLE, AND ELECTRONIC DEVICE", which is incorporated herein by reference in its entirety.

### TECHNICAL FIELD

This application relates to the field of computer technologies, and in particular, to a display method, a vehicle, and an electronic device.

### BACKGROUND

Currently, a display on an instrument panel in a new energy vehicle can display map information. In this solution, an IVI fused video stream is displayed on the display, and then other information is overlaid and displayed on the display. Because a map layer and a background layer of the IVI fused video stream are in different processes and a map drawing speed is slow, color change timings of areas are inconsistent during style switching of the display (for example, switching between black and white backgrounds or image redrawing), resulting in poor user visual experience.

### SUMMARY

In view of this, embodiments of this application provide a display method, a vehicle, and an electronic device, so that color change timings of areas are consistent during style switching of a display, thereby improving user visual experience.

According to a first aspect, an embodiment of this application provides a display method. The method includes:
replacing a first mask on a plurality of layers of a display with a second mask in response to an operation of a user, where the second mask is used to block a target layer on which an image of a target application is displayed, to enable the display not to display an image of the target layer;
performing a target operation on the plurality of layers; and
replacing the second mask with the first mask after the target operation performed on the target layer is completed, to enable the display to display the image of the target layer.

With reference to the first aspect, in some implementations of the first aspect, the first mask includes a punched-hole mask, and the second mask includes a full-screen mask.

With reference to the first aspect, in some implementations of the first aspect, a position of a hole in the punched-hole mask corresponds to a position of the image of the target layer, to enable the image of the target layer to be displayed on the display through the hole.

With reference to the first aspect, in some implementations of the first aspect, before the replacing a first mask on a plurality of layers of a display with a second mask in response to an operation of a user, the method further includes:
obtaining a layout parameter and feature data of the target application.

With reference to the first aspect, in some implementations of the first aspect, before the replacing the second mask with the first mask after the target operation performed on the target layer is completed, the method further includes:
generating a transition layer on the second mask; and
drawing transition information of the target application on the transition layer based on the layout parameter and the feature data.

With reference to the first aspect, in some implementations of the first aspect, after the target operation performed on the target layer is completed, the method further includes:
eliminating the transition layer and the transition information.

With reference to the first aspect, in some implementations of the first aspect, the target application includes a map application.

With reference to the first aspect, in some implementations of the first aspect, the feature data includes a TBT card, a three-point earthworm line, and information about top three surrounding locations.

With reference to the first aspect, in some implementations of the first aspect, the transition information includes simple map information.

With reference to the first aspect, in some implementations of the first aspect, the target application includes an energy flow rendered by a complex layer.

With reference to the first aspect, in some implementations of the first aspect, the feature data includes an energy text and an energy ratio.

With reference to the first aspect, in some implementations of the first aspect, the transition information includes simple energy information.

With reference to the first aspect, in some implementations of the first aspect, the plurality of layers further include a music layer.

The music layer is located above the target layer, and the first mask or the second mask is located between the target layer and the music layer.

With reference to the first aspect, in some implementations of the first aspect, the method further includes:
performing the target operation on the music layer.

With reference to the first aspect, in some implementations of the first aspect, the music layer is located above the transition layer.

With reference to the first aspect, in some implementations of the first aspect, the target operation includes: changing a color or redrawing an image.

According to a second aspect, an embodiment of this application provides a vehicle. The vehicle includes a main control device and a display, the main control device includes a processor and a memory, the memory is configured to store a computer program, the computer program includes program instructions, and when the processor runs the program instructions, the main control device is enabled to perform the steps of the foregoing method.

According to a third aspect, an embodiment of this application provides an electronic device, including a processor and a memory. The memory is configured to store a computer program, the computer program includes program instructions, and when the processor runs the program instructions, the electronic device is enabled to perform the steps of the foregoing method.

According to a fourth aspect, an embodiment of this application provides a computer-readable storage medium. The computer-readable storage medium stores a computer program, the computer program includes program instructions, and when the program requests to be run by a computer, the computer is enabled to perform the foregoing method.

In the technical solutions of the display method, the vehicle, and the electronic device provided in embodiments of this application, the first mask on the plurality of layers of the home screen is replaced with the second mask in response to the operation of the user. The second mask is used to block the target layer on which the image of the target application is displayed, to enable the home screen not to display the image of the target layer. The target operation is performed on the target layer. After the target operation performed on the target layer is completed, the second mask is replaced with the first mask, to enable the home screen to display the image of the target layer. In this way, color change timings of areas are consistent during style switching of the display, thereby improving user visual experience.

### BRIEF DESCRIPTION OF DRAWINGS

FIG. 1A and FIG. 1B are a diagram of a plurality of layers of a current display;
FIG. 2A to FIG. 2C are a diagram of inconsistent color change timings in areas during style switching of a display;
FIG. 3 is a diagram of an architecture of a display system according to an embodiment of the present invention;
FIG. 4A and FIG. 4B are a diagram of a display layer of a display when a target application includes a map application;
FIG. 5 is a diagram of a display layer change in a style switching process of a display when a target application includes a map application;
FIG. 6A to FIG. 6C are a diagram of displaying transition information in a style switching process of a display when a target application includes a map application;
FIG. 7A and FIG. 7B are a diagram of a display layer of a display when a target application includes an energy flow rendered by a complex layer;
FIG. 8 is a diagram of a display layer change in a style switching process of a display when a target application includes an energy flow rendered by a complex layer;
FIG. 9A to FIG. 9C are a diagram of displaying transition information in a style switching process of a display when a target application includes an energy flow rendered by a complex layer;
FIG. 10 is a diagram of interaction of a display method according to an embodiment of the present invention;
FIG. 11 is a flowchart of a display method according to an embodiment of the present invention;
FIG. 12 is a diagram of a structure of an electronic device according to an embodiment of the present invention;
FIG. 13 is a diagram of a structure of an electronic device according to an embodiment of the present invention; and
FIG. 14 is a block diagram of a software structure of an electronic device according to an embodiment of the present invention.

### DESCRIPTION OF EMBODIMENTS

To make the technical solutions in the present invention more comprehensible, the following describes embodiments of the present invention in detail with reference to the accompanying drawings.

It should be noted that the described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "the" and "this" of singular forms used in embodiments and the appended claims of the present invention are also intended to include plural forms, unless otherwise specified in the context clearly.

It should be understood that the term "and/or" used in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

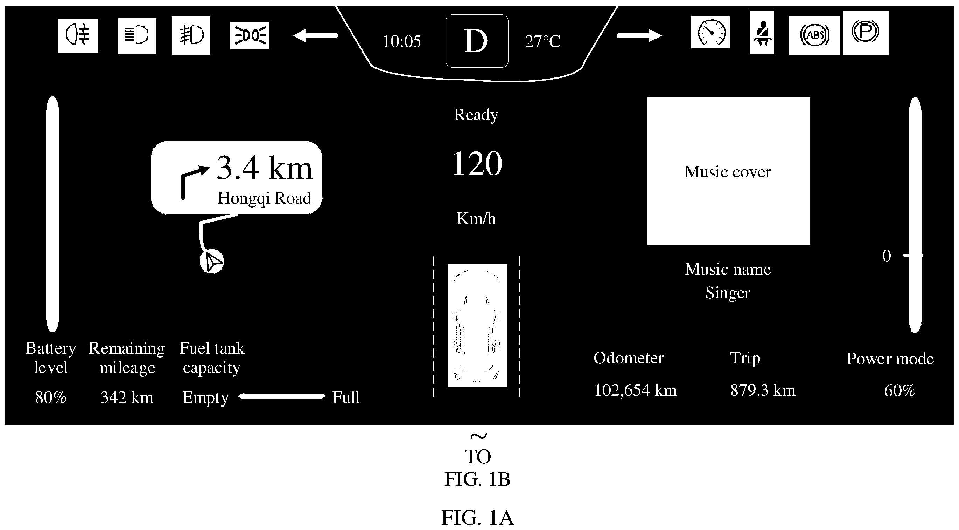

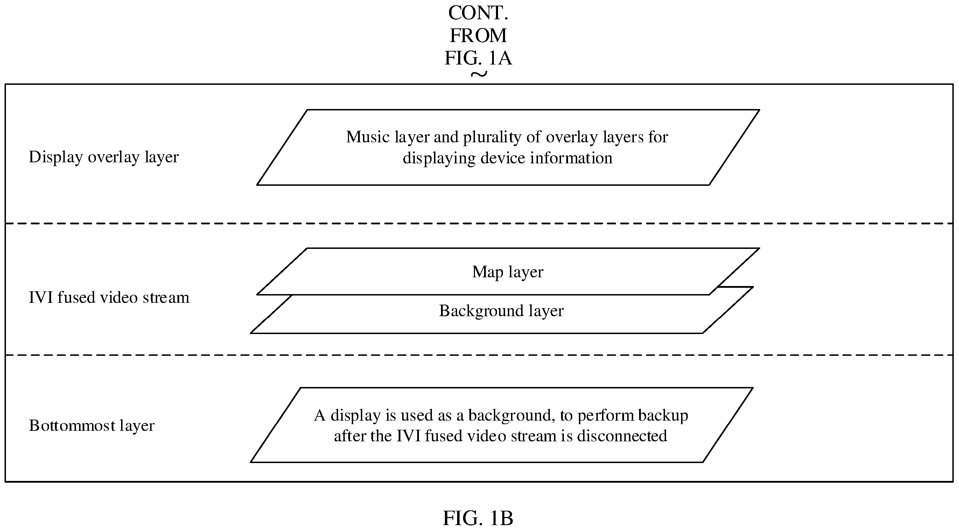

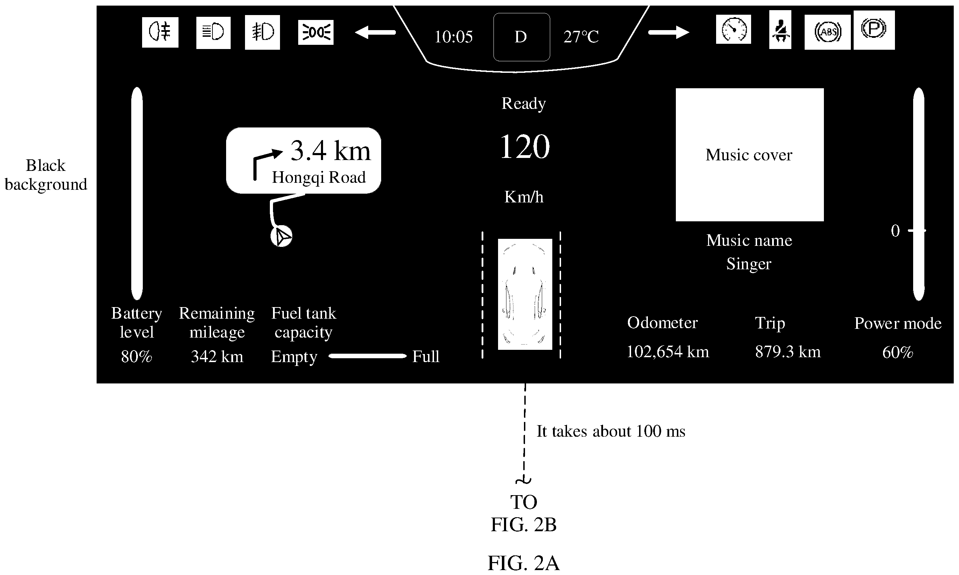

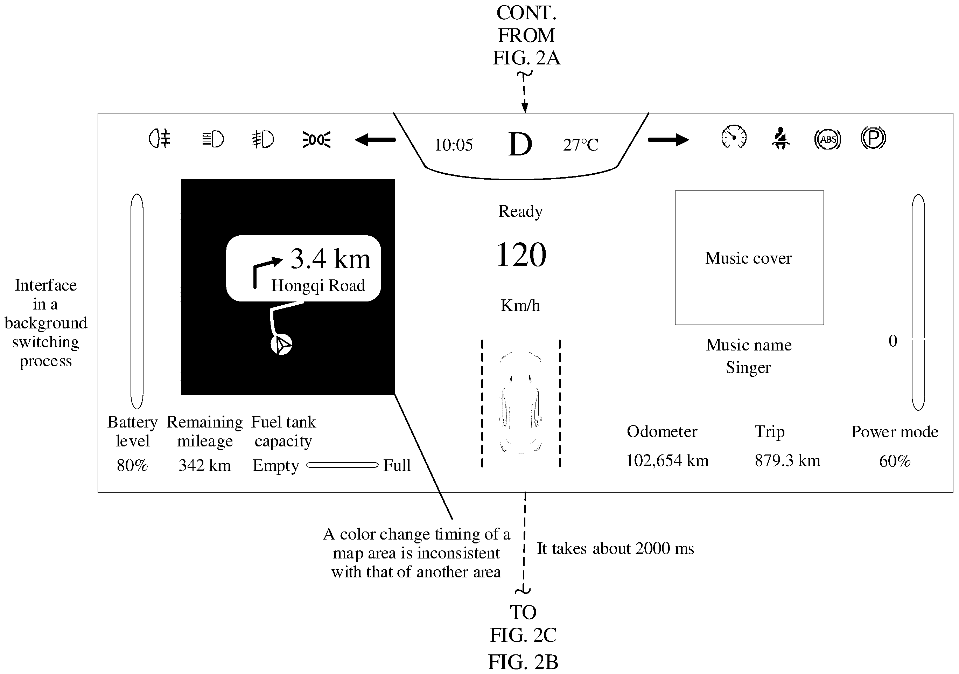

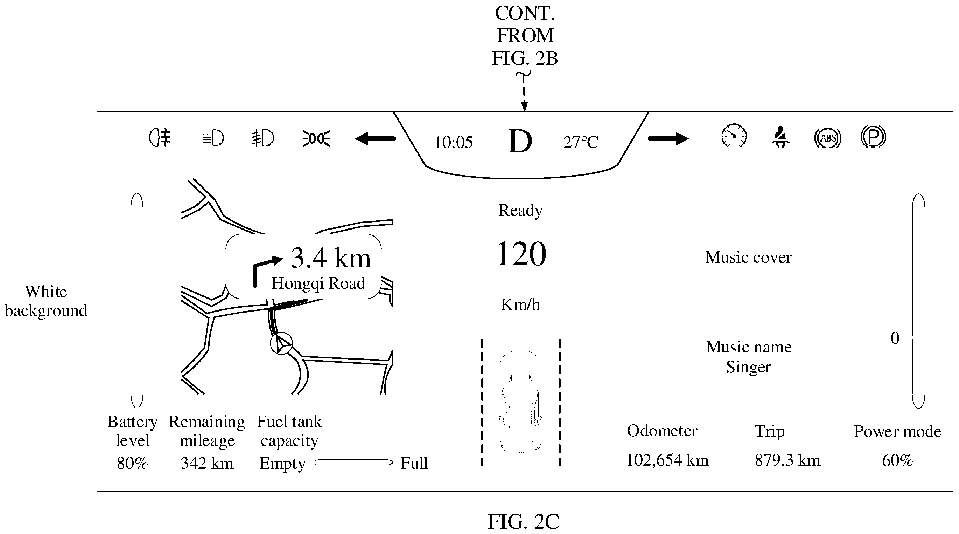

Currently, a display on an instrument panel in a new energy vehicle can display map information. In this solution, an IVI fused video stream is displayed on the display, and then other information is overlaid and displayed on the display. As shown in FIG. 1A and FIG. 1B, the display includes a plurality of layers such as a bottommost layer, a background layer and a map layer of the IVI fused video stream, and a display overlay layer. The display overlay layer includes a music layer and a plurality of overlay layers for displaying device information. For example, when the device information includes vehicle information, the vehicle information includes an indicator light, a gear, an ADAS, ACC, a time, a temperature, an alarm card, and the like. As shown in FIG. 2A to FIG. 2C, because the map layer and the background layer of the IVI fused video stream are in different processes, and a map drawing speed is slow, color change timings of areas are inconsistent during style switching of the display (for example, switching between black and white backgrounds or image redrawing), resulting in poor user visual experience.

Currently, a vehicle manufacturer does not have a solution to the foregoing problem. The vehicle manufacturer optimizes a rendering speed only for applications that are slow to load, such as a map application. However, the loading speed is still slow. In addition, with the development of an intelligent cockpit, more high-load and slow-loading applications are displayed on a vehicle instrument panel or displays of some electronic devices. Therefore, optimizing a rendering speed for a single application has some limitations.

Based on the foregoing technical problems, embodiments of the present invention provide a display system, so that color change timings of areas are consistent during style switching of the display, thereby improving user visual experience.

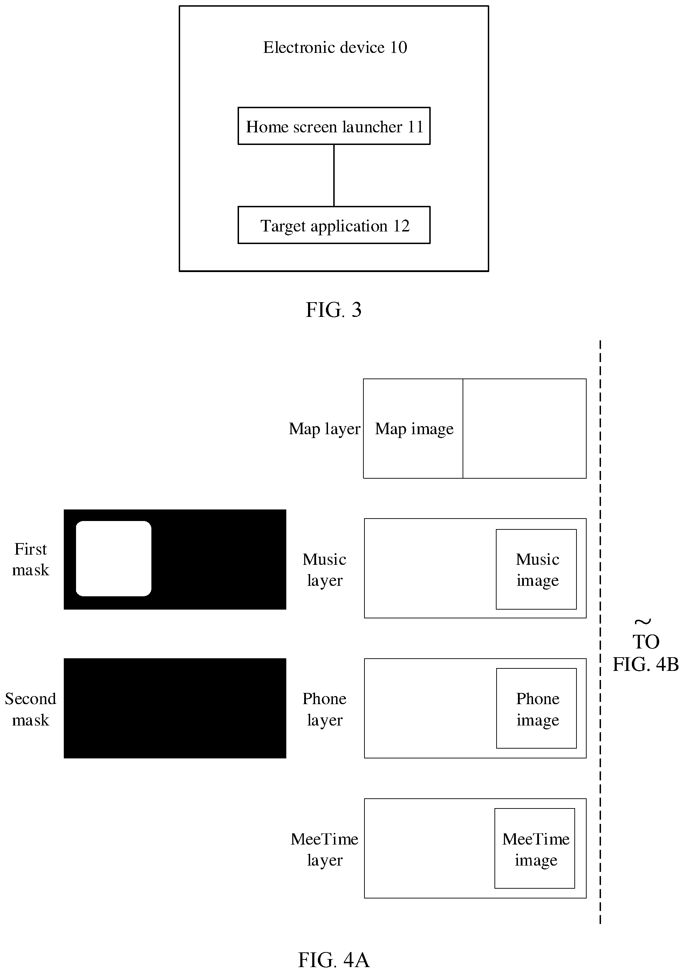

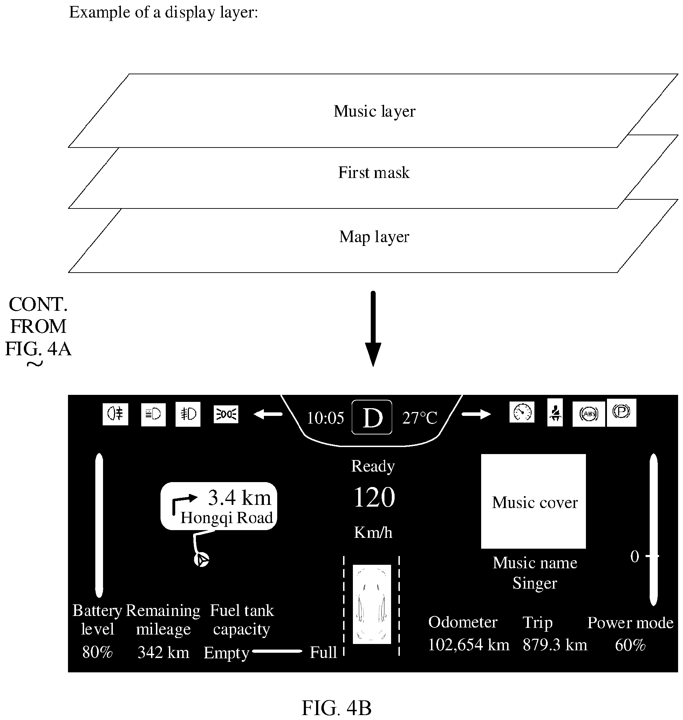

FIG. 3 is a diagram of an architecture of a display system according to an embodiment of the present invention. As shown in FIG. 3, the display system includes an electronic device 10. The electronic device 10 includes a home screen launcher 11 and a target application 12. The home screen launcher 11 is configured to send an obtaining request to the target application 12. The obtaining request is used to obtain a layout parameter and image data of the target application 12. The target application 12 is configured to send the layout parameter and the image data of the target application 12 to the home screen launcher 11 based on the obtaining request. The home screen launcher 11 is further configured to display an image of the target application 12 on a display based on the layout parameter and the image data. The layout parameter of the target application 12 is used to determine a specific display position of the image of the target application 12 on the display. As shown in FIG. 4A and FIG. 4B, a map image of a map application is displayed on the left side of the display, so that the left side of a map layer corresponding to the map application is used to display the map image, and the right side of the map layer is transparent.

The target application 12 includes a high-load application with a slow loading speed. The electronic device 10 includes a device having a display capability. For example, the electronic device 10 includes a mobile phone, a computer, a tablet, a wearable device, a vehicle, or the like. For example, when the electronic device 10 includes a vehicle, the display is an instrument panel of the vehicle, and the target application 12 includes a map application or an energy flow rendered by a complex layer.

In this embodiment of the present invention, when loading and displaying a plurality of applications, the electronic device 10 captures several frames of images, and searches for, based on the several frames of images, an application corresponding to a layer on which an area with a slow loading speed is located, so as to detect that the application is a high-load application with a slow loading speed. Therefore, the electronic device 10 may detect at least one target application 12, and add a mark to the at least one detected target application 12, so that the electronic device 10 may directly identify the target application 12 based on the mark.

The image data of the target application 12 includes feature data. For example, when the target application 12 is a map application, the feature data includes a TBT card, a three-point earthworm line, and information about top three surrounding locations. When the target application 12 is an energy flow rendered by a complex layer, the feature data includes an energy text and an energy ratio.

It should be noted that the electronic device 10 may further include another application (for example, a music application) with a fast loading speed. The home screen launcher 11 is further configured to obtain a layout parameter and image data of the another application, and display an image of the another application on the display based on the layout parameter and the image data. The layout parameter of the another application is used to determine a specific display position of the image of the another application on the display. As shown in FIG. 4A and FIG. 4B, a music image of the music application is displayed on the right side of the display, so that the right side of a music layer corresponding to the music application is used to draw a map image, and the left side of the map layer is transparent.

It should be noted that the home screen launcher 11 may obtain the layout parameter of the target application 12 or the another application only for the first time. The image data of the target application 12 needs to be obtained by the home screen launcher 11 in real time.

The home screen launcher 11 is further configured to replace a first mask on a plurality of layers of the display with a second mask in response to an operation of a user. The second mask is used to block a target layer on which the image of the target application 12 is displayed, to enable the display not to display an image of the target layer. For example, if the user wants to switch a background color of the display from black to white, the user may tap a background switching control on the display, press a background switching button of the electronic device, say "background switching", or the like. The plurality of layers of the display further include the music layer. The music layer is located above the target layer, and the first mask or the second mask is located between the target layer and the music layer. The first mask includes a punched-hole mask, and the second mask includes a full-screen mask. A position of a hole in the punched-hole mask corresponds to a position of the image of the target layer, to enable the image of the target layer to be displayed on the display through the hole. A color of an area other than the hole in the punched-hole mask is black. All areas of the full-screen mask are black. Therefore, both the punched-hole mask and the full-screen mask belong to a background layer. When the display is in a non-style-switching state, the punched-hole mask is used as the background layer, to enable the image of the target layer to be displayed on the display through the hole. When the display is in a style switching state, because a loading speed of the image of the target layer is slower than that of another layer, a style switching timing of an image area of the icon layer is inconsistent with that of another area. Therefore, the full-screen mask is used as the background layer, to enable the display not to display the image of the target layer.

In this embodiment of the present invention, after detecting the target application 12, the electronic device 10 may configure a corresponding punched-hole mask for the target layer based on a position of the image displayed on the target layer corresponding to the target application 12.

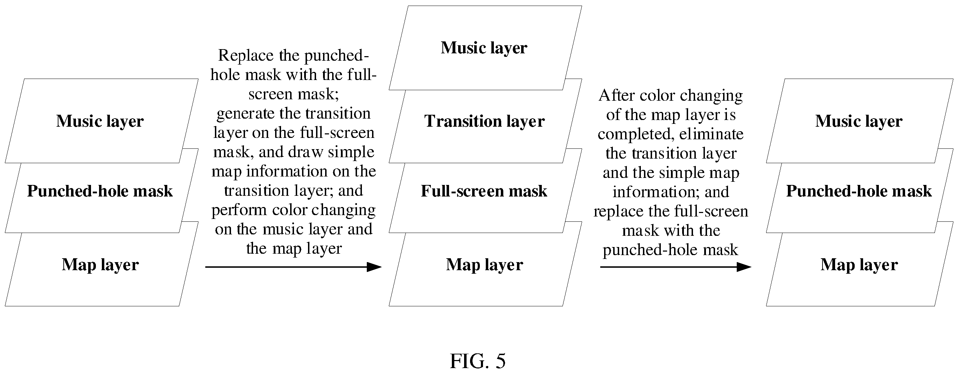

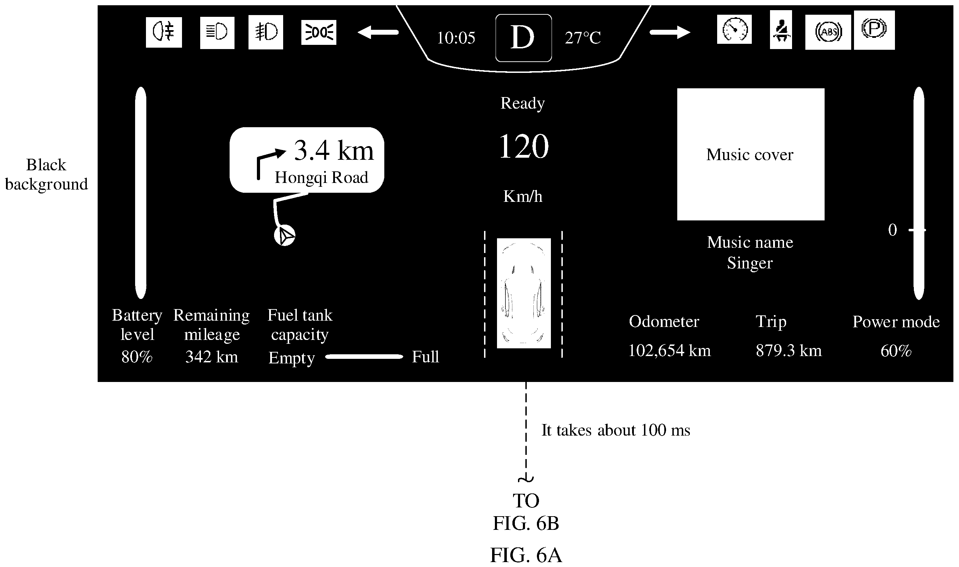

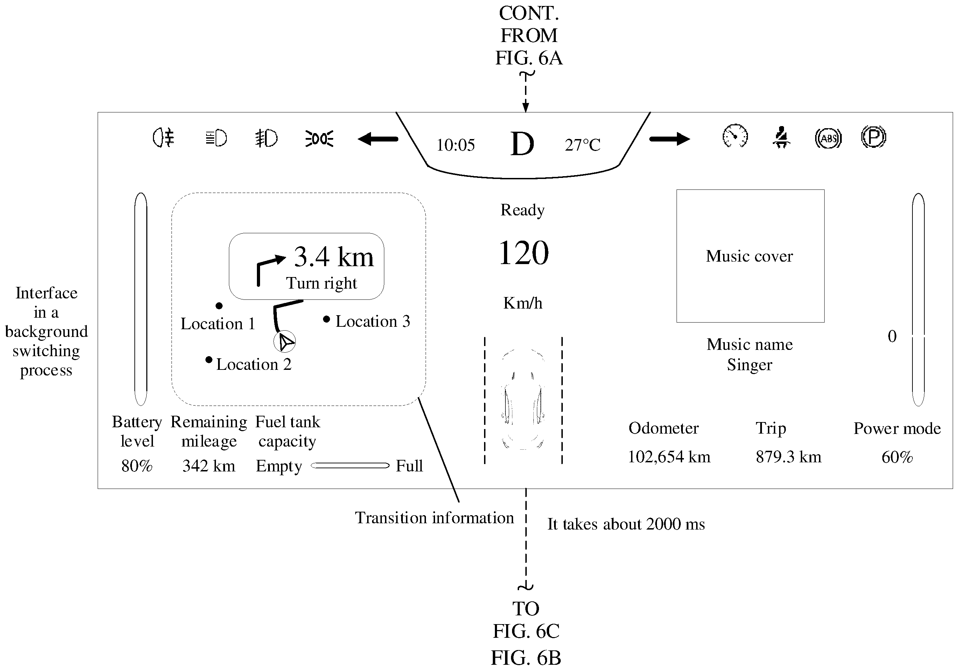

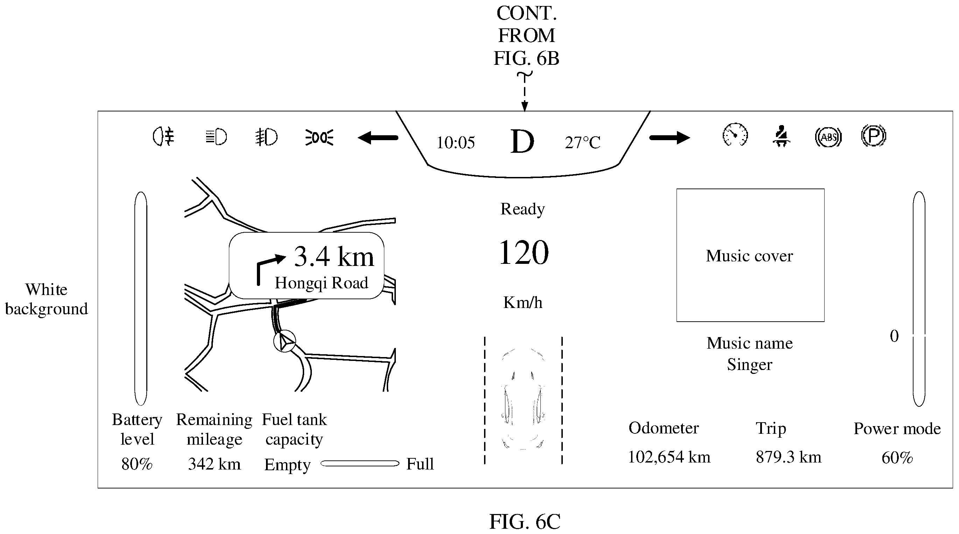

For example, as shown in FIG. 4A and FIG. 4B, the map image of the map application is on the left side of the display, and a hole in the first mask is also on the left side. As shown in FIG. 5, when the display is in a background color switching state, because a loading speed of the map image of the map layer is slower than that of another layer, a color change timing of a map image area is inconsistent with that of another area. In this case, the punched-hole mask is switched to the full-screen mask, to enable the display not to display the image of the map layer. After color changing of the map layer is completed, the full-screen mask is replaced with the punched-hole mask, to enable the display to display the image of the map layer. As shown in FIG. 6A to FIG. 6C, on an interface of the display in a background switching process, color change timings of areas are consistent.

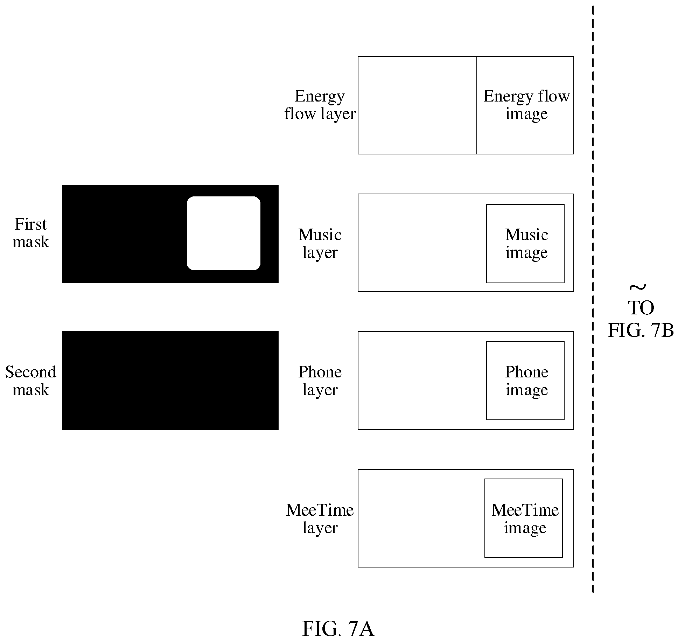

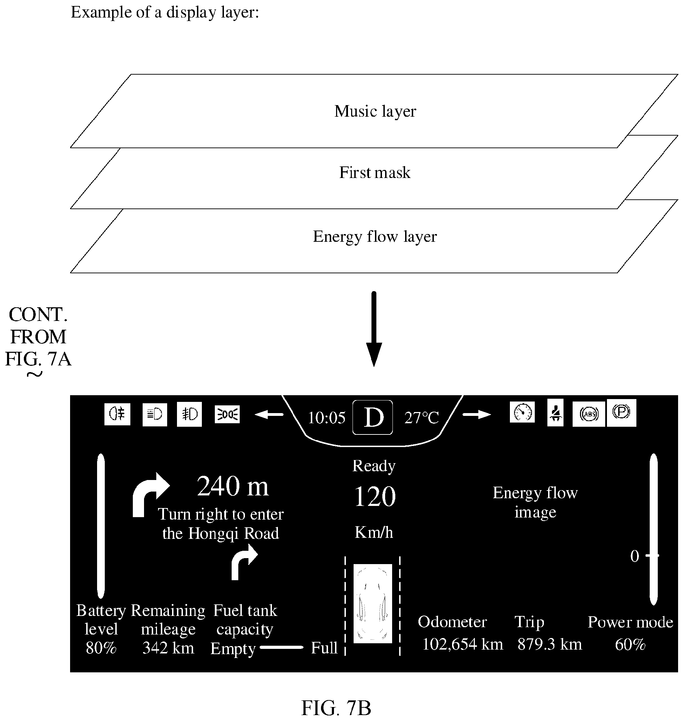

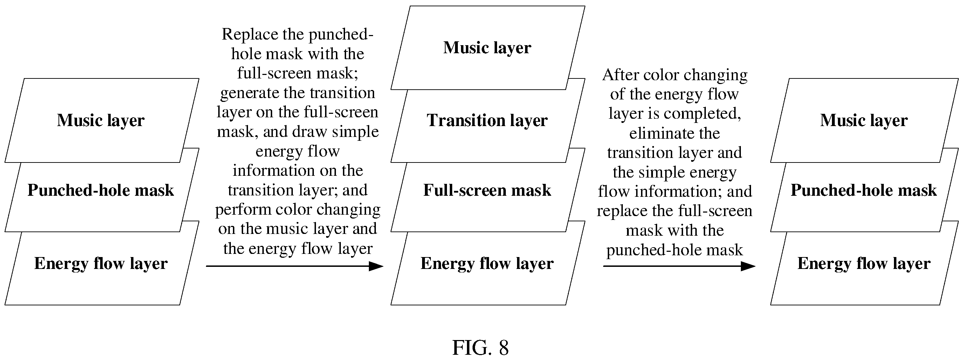

For example, as shown in FIG. 7A and FIG. 7B, an energy flow image of the energy flow rendered by the complex layer is on the right side of the display, and the hole in the first mask is also on the right side. As shown in FIG. 8, when the display is in a background color switching state, because a loading speed of the energy flow image is slower than that of an image of another layer, a color change timing of an energy flow image area is inconsistent with that of another area. In this case, the punched-hole mask is switched to the full-screen mask, to enable the display not to display the image of the energy flow layer. After color changing of the energy flow layer is completed, the full-screen mask is replaced with the punched-hole mask, to enable the display to display the image of the energy flow layer. As shown in FIG. 6A to FIG. 6C, on an interface of the display in a background switching process, color change timings of areas are consistent.

In this embodiment of the present invention, the first mask and the second mask are both responsible for a display background and a target application mask. In a switching process, two layers, namely, the first mask and the second mask, are controlled (in a steady state, at most one of the first mask and the second mask can exist), to resolve problems of a division line and slow image rendering during black-and-white switching of the display interface, so that switching timings of elements are consistent during style switching of the entire display interface.

As shown in FIG. 4A and FIG. 4B, an entire image of the display is formed by overlaying a plurality of layers. A punched-hole mask is overlaid on the map layer on the left side, and then the music layer displayed on the right side is overlaid on the punched-hole mask. During black-and-white switching of the display, because map redrawing is slow, the punched-hole mask is first replaced with the full-screen mask to cover a map below, and the music layer is simultaneously switched to a new color. After map redrawing is completed, the full-screen mask is replaced with the punched-hole mask, and a redrawn map is displayed again. The black-and-white switching process is completed.

In this embodiment of the present invention, the home screen launcher 11 is further configured to: generate a transition layer on the second mask, and draw transition information of the target application 12 on the transition layer based on the layout parameter and the feature data.

In the foregoing process, duration of the full-screen mask may be as long as several seconds. When a vehicle speed is high, a driver may travel into a wrong intersection because the driver cannot see important information on the map. To resolve this problem, feature data of the map application may be first obtained, and then the feature data of the map application is loaded when the punched-hole mask is switched to the full-screen mask. During this period, the driver can still see the feature data of the map application, and therefore no important information is missed, that is, there is no information blind spot.

In this embodiment of the present invention, the feature data of the target application is obtained, and the target application is rendered in phases, so that important information is not lost during image redrawing.

For example, when the target application 12 is the map application, the feature data includes the TBT card, the three-point earthworm line, and the information about top three surrounding locations. Information included in the TBT card in map navigation usually includes a steering direction, a steering distance, a road name, and the like. Map information in the map navigation is complex. The TBT card further includes information about surrounding locations in addition to earthworm lines (routes). For the driver, the important information is a corner turning moment and the most important surrounding locations. Therefore, feature information of the map application further includes the three-point earthworm line and the information about top three surrounding locations.

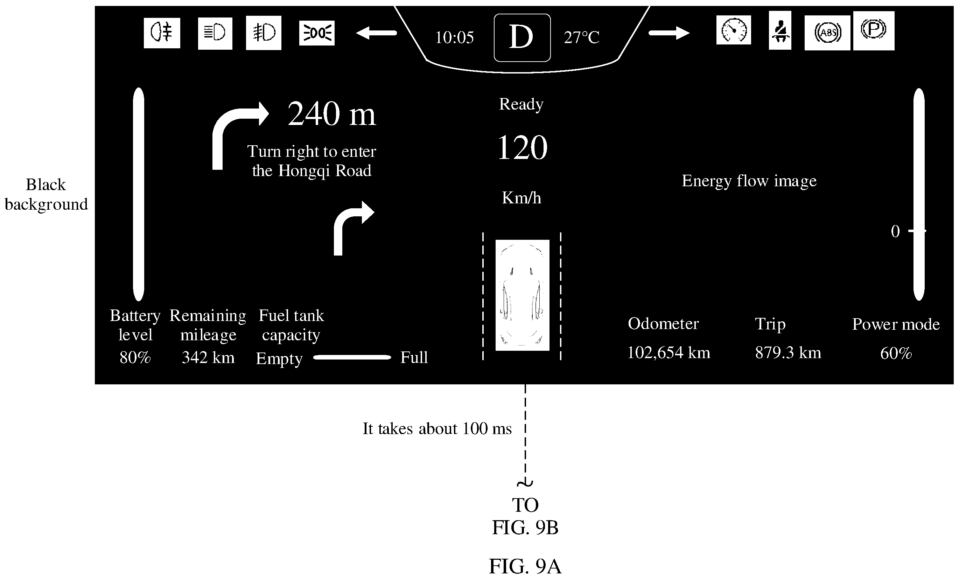

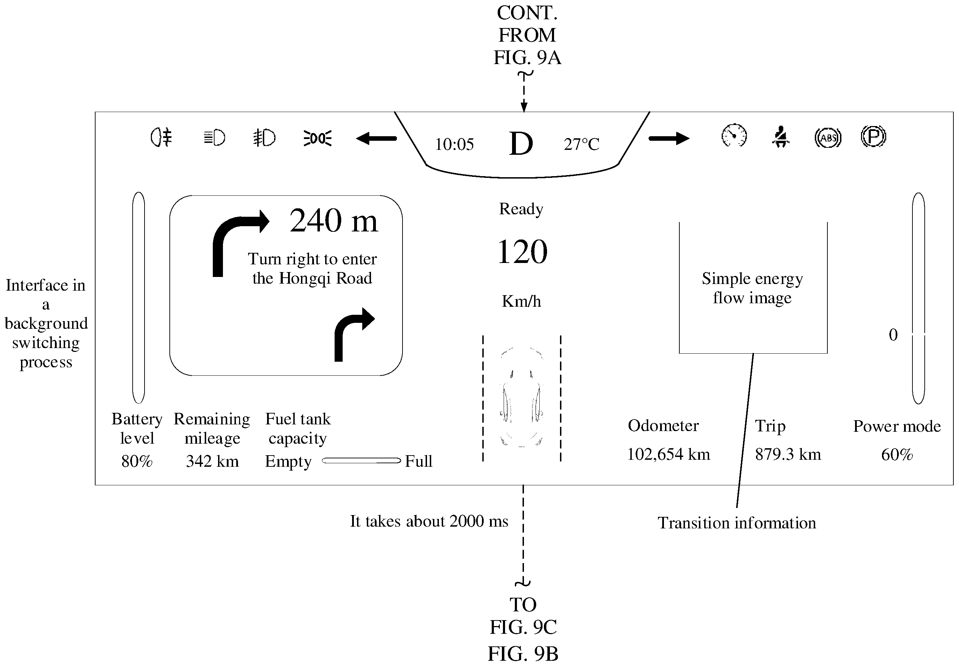

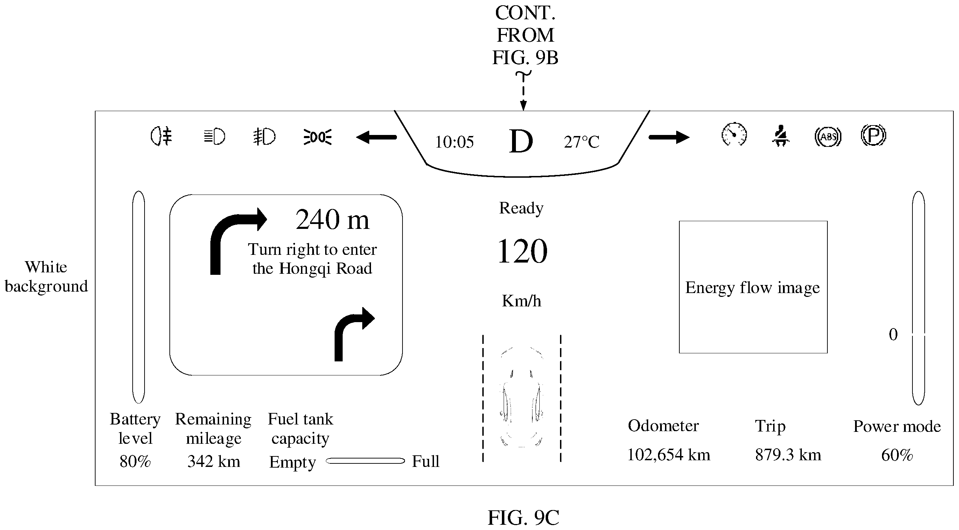

For example, the target application includes the energy flow rendered by the complex layer. As shown in FIG. 9A to FIG. 9C, the transition information includes simple energy information.

The music layer is located above the transition layer.

The home screen launcher 11 is further configured to send, to the target application 12, an instruction for performing a target operation. In this embodiment of the present invention, the target operation includes: changing a color or redrawing an image. Specifically, changing a color includes changing a color of the display, for example, changing from a night mode to a daytime mode. In addition, the home screen launcher 11 is further configured to send, to another application, the instruction for performing the target operation. It should be noted that, after the home screen launcher 11 responds to the operation of the user, all layers other than the background layer need to change a color or redraw an image. Therefore, the home screen launcher 11 separately sends, to all applications corresponding to images displayed on the display, the instruction for performing the target operation.

The target application 12 is further configured to: perform the target operation on the target layer based on the instruction for performing the target operation, and send a notification message to the home screen launcher 11 after the target operation performed on the target layer is completed. The home screen launcher 11 eliminates the transition layer and the transition information based on the notification message, and replaces the second mask with the first mask, to enable the display to display the image of the target layer. Because the target application 12 is loaded slower than another application, the home screen launcher 11 replaces the second mask with the first mask only after the target application completes the target operation. For example, after receiving a message indicating that color change rendering of the map layer is completed, the home screen launcher 11 eliminates simple map information, and then changes the full-screen mask into the punched-hole mask.

It should be noted that the home screen launcher 11 may synchronously perform the following operations: replacing the first mask on the plurality layers of the display with the second mask in response to the operation of the user; generating the transition layer on the second mask; drawing the transition information of the target application 12 on the transition layer based on the layout parameter and the feature data; and sending, to the target application 12, the instruction for performing the target operation.

According to the display system provided in embodiments of the present invention, because a time for switching between the first mask and the second mask is far less than a time for switching a style of the target layer, color change timings of areas are consistent during style switching of the display, thereby improving user visual experience.

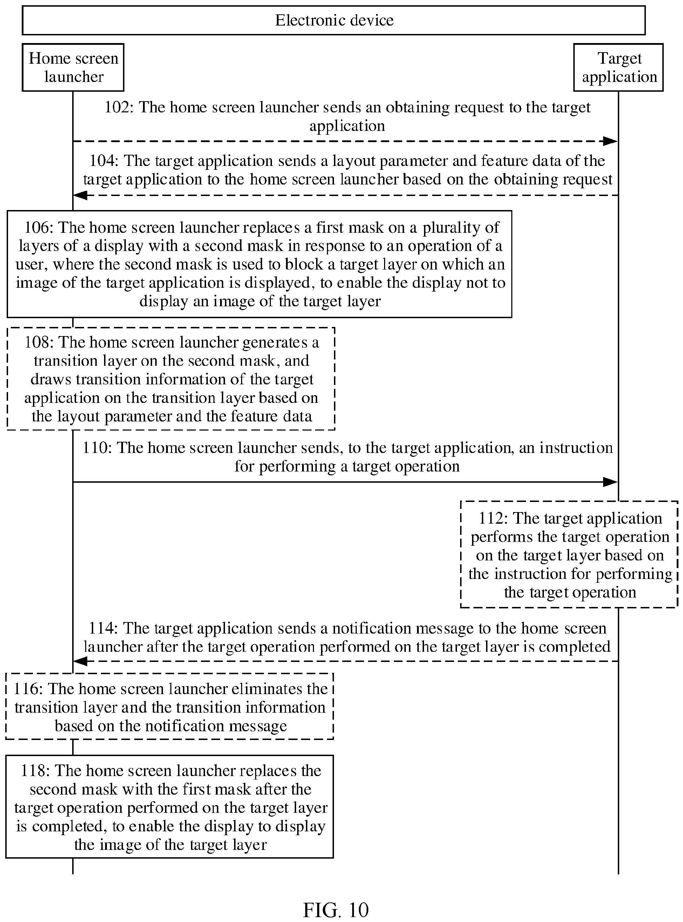

Based on the display system shown in FIG. 3, an embodiment of the present invention provides a display method. FIG. 10 is a diagram of interaction of the display method according to this embodiment of the present invention. As shown in FIG. 10, the method includes the following steps.

Step 106: A home screen launcher replaces a first mask on a plurality of layers of a display with a second mask in response to an operation of a user, where the second mask is used to block a target layer on which an image of a target application is displayed, to enable the display not to display an image of the target layer.

In this embodiment of the present invention, an electronic device includes the home screen launcher and the target application, and the target application includes a high-load application with a slow loading speed. The electronic device includes a device having a display capability. For example, the electronic device includes a mobile phone, a computer, a tablet, a wearable device, a vehicle, or the like. For example, when the electronic device includes a vehicle, the display is an instrument panel of the vehicle, and the target application includes a map application or an energy flow rendered by a complex layer.

For example, when the target application includes the map application, the target layer is a map layer; or when the target application includes the energy flow rendered by the complex layer, the target layer is an energy flow layer.

For example, if the user wants to switch a background color of the display from black to white, the user may tap a background switching control on the display, press a background switching button of the electronic device, say "background switching", or the like. The plurality of layers of the display further include a music layer. The music layer is located above the target layer, and the first mask or the second mask is located between the target layer and the music layer. The first mask includes a punched-hole mask, and the second mask includes a full-screen mask. A position of a hole in the punched-hole mask corresponds to a position of the image of the target layer, to enable the image of the target layer to be displayed on the display through the hole. A color of an area other than the hole in the punched-hole mask is black. All areas of the full-screen mask are black. Therefore, both the punched-hole mask and the full-screen mask belong to a background layer. When the display is in a non-style-switching state, the punched-hole mask is used as the background layer, to enable the image of the target layer to be displayed on the display through the hole. When the display is in a style switching state, because a loading speed of the image of the target layer is slower than that of another layer, a style switching timing of an image area of the icon layer is inconsistent with that of another area. Therefore, the full-screen mask is used as the background layer, to enable the display not to display the image of the target layer.

For example, as shown in FIG. 4A and FIG. 4B, a map image of the map application is on the left side of the display, and the hole in the first mask is also on the left side. As shown in FIG. 5, when the display is in a background color switching state, because a loading speed of the map image of the map layer is slower than that of another layer, a color change timing of a map image area is inconsistent with that of another area. In this case, the punched-hole mask is switched to the full-screen mask, to enable the display not to display the image of the map layer. After color changing of the map layer is completed, the full-screen mask is replaced with the punched-hole mask, to enable the display to display the image of the map layer. As shown in FIG. 6A to FIG. 6C, on an interface of the display in a background switching process, color change timings of areas are consistent.

For example, as shown in FIG. 7A and FIG. 7B, an energy flow image of the energy flow rendered by the complex layer is on the right side of the display, and the hole in the first mask is also on the right side. As shown in FIG. 8, when the display is in a background color switching state, because a loading speed of the energy flow image is slower than that of an image of another layer, a color change timing of an energy flow image area is inconsistent with that of another area. In this case, the punched-hole mask is switched to the full-screen mask, to enable the display not to display the image of the energy flow layer. After color changing of the energy flow layer is completed, the full-screen mask is replaced with the punched-hole mask, to enable the display to display the image of the energy flow layer. As shown in FIG. 6A to FIG. 6C, on an interface of the display in a background switching process, color change timings of areas are consistent.

In this embodiment of the present invention, the first mask and the second mask are both responsible for a display background and a target application mask. In a switching process, two layers, namely, the first mask and the second mask, are controlled (in a steady state, at most one of the first mask and the second mask can exist), to resolve problems of a division line and slow image rendering during black-and-white switching of the display interface, so that switching timings of elements are consistent during style switching of the entire display interface.

As shown in FIG. 4A and FIG. 4B, an entire image of the display is formed by overlaying a plurality of layers. A punched-hole mask is overlaid on the map layer on the left side, and then the music layer displayed on the right side is overlaid on the punched-hole mask. During black-and-white switching of the display, because map redrawing is slow, the punched-hole mask is first replaced with a full-screen mask to cover a map below, and the music layer is simultaneously switched to a new color. After map redrawing is completed, the full-screen mask is replaced with the punched-hole mask, and a redrawn map is displayed again. The black-and-white switching process is completed.

Step 110: The home screen launcher sends, to the target application, an instruction for performing a target operation.

In this embodiment of the present invention, the target operation includes: changing a color or redrawing an image. Specifically, changing a color includes changing a color of the display, for example, changing from a night mode to a daytime mode. In addition, the home screen launcher further sends, to another application, the instruction for performing the target operation. It should be noted that, after the home screen launcher responds to the operation of the user, all layers other than the background layer need to change a color or redraw an image. Therefore, the home screen launcher separately sends, to all applications corresponding to images displayed on the display, the instruction for performing the target operation.

Step 118: The home screen launcher replaces the second mask with the first mask after the target operation performed on the target layer is completed, to enable the display to display the image of the target layer.

Because the target application is loaded slower than another application, the home screen launcher replaces the second mask with the first mask only after the icon layer of the target application completes the target operation. For example, after receiving a message indicating that color change rendering of the map layer is completed, the home screen launcher eliminates simple map information, and then changes the full-screen mask into the punched-hole mask.

Optionally, before step 106, the method further includes step 102 and step 104.

Step 102: The home screen launcher sends an obtaining request to the target application.

The obtaining request is used to obtain a layout parameter and image data of the target application. The image data includes feature data. For example, when the target application is the map application, the feature data includes a TBT card, a three-point earthworm line, and information about top three surrounding locations. When the target application is the energy flow rendered by the complex layer, the feature data includes an energy text and an energy ratio.

The layout parameter of the target application is used to determine a specific display position of the image of the target application on the display. As shown in FIG. 4A and FIG. 4B, the map image of the map application is displayed on the left side of the display, so that the left side of the map layer corresponding to the map application is used to display the map image, and the right side of the map layer is transparent.

It should be noted that the electronic device may further include another application (for example, a music application) with a fast loading speed. The home screen launcher further obtains a layout parameter and image data of the another application, and displays an image of the another application on the display based on the layout parameter and the image data. The layout parameter of the another application is used to determine a specific display position of the image of the another application on the display. As shown in FIG. 4A and FIG. 4B, a music image of the music application is displayed on the right side of the display, so that the right side of a music layer corresponding to the music application is used to draw a map image, and the left side of the map layer is transparent.

Step 104: The target application sends the layout parameter and the feature data of the target application to the home screen launcher based on the obtaining request.

It should be noted that the home screen launcher may obtain the layout parameter of the target application or the another application only for the first time. The image data of the target application needs to be obtained by the home screen launcher in real time.

Optionally, step 108 is further included between step 106 and step 110.

Step 108: The home screen launcher generates a transition layer on the second mask, and draws transition information of the target application on the transition layer based on the layout parameter and the feature data.

In the foregoing process, duration of the full-screen mask may be as long as several seconds. When a vehicle speed is high, a driver may travel into a wrong intersection because the driver cannot see important information on the map. To resolve this problem, the feature data of the map application may be first obtained, and then the feature data of the map application is loaded as transition information when the punched-hole mask is switched to the full-screen mask. During this period, the driver can still see the feature data of the map application, and therefore no important information is missed, that is, there is no information blind spot.

In this embodiment of the present invention, the feature data of the target application is obtained, and the target application is rendered in phases, so that important information is not lost during image redrawing.

For example, when the target application 12 is the map application, the feature data includes the TBT card, the three-point earthworm line, and the information about top three surrounding locations. Information included in the TBT card in map navigation usually includes a steering direction, a steering distance, a road name, and the like. Map information in the map navigation is complex. The TBT card further includes information about surrounding locations in addition to earthworm lines (routes). For the driver, the important information is a corner turning moment and the most important surrounding locations. Therefore, feature information of the map application further includes the three-point earthworm line and the information about top three surrounding locations.

For example, the target application includes the energy flow rendered by the complex layer. As shown in FIG. 9A to FIG. 9C, the transition information includes simple energy information.

The music layer is located above the transition layer.

Optionally, step 112, step 114, and step 116 are further included between step 110 and step 118.

Step 112: The target application performs the target operation on the target layer based on the instruction for performing the target operation.

For example, the map application draws, on the map layer based on a color changing instruction, an image whose color is changed.

Step 114: The target application sends a notification message to the home screen launcher after the target operation performed on the target layer is completed.

Step 116: The home screen launcher eliminates the transition layer and the transition information based on the notification message.

The home screen launcher first eliminates the transition layer and the transition information, and then replaces the second mask with the first mask, to prevent the transition layer from blocking the image of the target layer.

It should be noted that step 106, step 108, and step 110 may be performed synchronously.

According to the display method provided in this embodiment of the present invention, because a time for switching between the first mask and the second mask is far less than a time for switching a style of the target layer, color change timings of areas are consistent during style switching of the display, thereby improving user visual experience.

In the technical solutions of the display method provided in this embodiment of the present invention, the first mask on the plurality of layers of the home screen is replaced with the second mask in response to the operation of the user. The second mask is used to block the target layer on which the image of the target application is displayed, to enable the home screen not to display the image of the target layer. The target operation is performed on the target layer. After the target operation performed on the target layer is completed, the second mask is replaced with the first mask, to enable the home screen to display the image of the target layer. In this way, color change timings of areas are consistent during style switching of the display, thereby improving user visual experience.

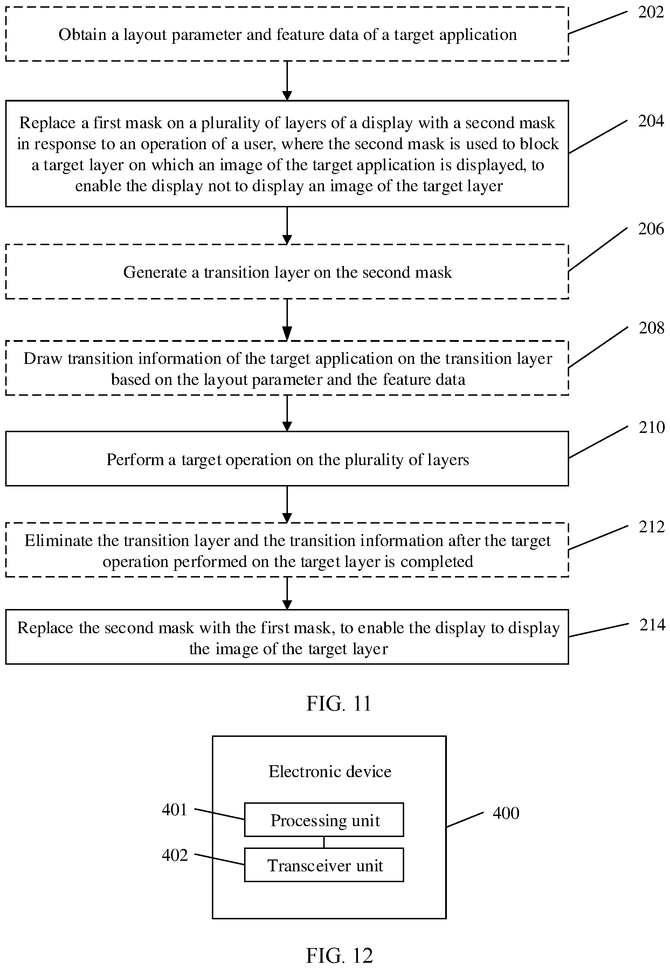

Based on the display system shown in FIG. 3, an embodiment of the present invention provides another display method. FIG. 11 is a flowchart of the display method according to this embodiment of the present invention. As shown in FIG. 11, the method includes the following steps.

Step 204: Replace a first mask on a plurality of layers of a display with a second mask in response to an operation of a user, where the second mask is used to block a target layer on which an image of a target application is displayed, to enable the display not to display an image of the target layer.

In this embodiment of the present invention, each step may be performed by an electronic device. The electronic device includes a device having a display capability. For example, the electronic device includes a mobile phone, a computer, a tablet, a wearable device, a vehicle, or the like. For example, the electronic device includes a mobile phone, a computer, a tablet, a wearable device, a vehicle, or the like. The target application is installed in the electronic device, and the target application includes a high-load application that is slowly loaded. For example, when the electronic device includes a vehicle, the display is an instrument panel of the vehicle, and the target application includes a map application or an energy flow rendered by a complex layer.

For example, when the target application is the map application, the target layer is a map layer; or when the target application includes the energy flow rendered by the complex layer, the target layer is an energy flow layer.

For example, if the user wants to switch a background color of the display from black to white, the user may tap a background switching control on the display, press a background switching button of the electronic device, say "background switching", or the like. The plurality of layers of the display further include a music layer. The music layer is located above the target layer, and the first mask or the second mask is located between the target layer and the music layer. The first mask includes a punched-hole mask, and the second mask includes a full-screen mask. A position of a hole in the punched-hole mask corresponds to a position of the image of the target layer, to enable the image of the target layer to be displayed on the display through the hole. A color of an area other than the hole in the punched-hole mask is black. All areas of the full-screen mask are black. Therefore, both the punched-hole mask and the full-screen mask belong to a background layer. When the display is in a non-style-switching state, the punched-hole mask is used as the background layer, to enable the image of the target layer to be displayed on the display through the hole. When the display is in a style switching state, because a loading speed of the image of the target layer is slower than that of another layer, a style switching timing of an image area of the icon layer is inconsistent with that of another area. Therefore, the full-screen mask is used as the background layer, to enable the display not to display the image of the target layer.

For example, as shown in FIG. 4A and FIG. 4B, a map image of the map application is on the left side of the display, and the hole in the first mask is also on the left side. As shown in FIG. 5, when the display is in a background color switching state, because a loading speed of the map image of the map layer is slower than that of another layer, a color change timing of a map image area is inconsistent with that of another area. In this case, the punched-hole mask is switched to the full-screen mask, to enable the display not to display the image of the map layer. After color changing of the map layer is completed, the full-screen mask is replaced with the punched-hole mask, to enable the display to display the image of the map layer. As shown in FIG. 6A to FIG. 6C, on an interface of the display in a background switching process, color change timings of areas are consistent.

For example, as shown in FIG. 7A and FIG. 7B, an energy flow image of the energy flow rendered by the complex layer is on the right side of the display, and the hole in the first mask is also on the right side. As shown in FIG. 8, when the display is in a background color switching state, because a loading speed of the energy flow image is slower than that of an image of another layer, a color change timing of an energy flow image area is inconsistent with that of another area. In this case, the punched-hole mask is switched to the full-screen mask, to enable the display not to display the image of the energy flow layer. After color changing of the energy flow layer is completed, the full-screen mask is replaced with the punched-hole mask, to enable the display to display the image of the energy flow layer. As shown in FIG. 6A to FIG. 6C, on an interface of the display in a background switching process, color change timings of areas are consistent.

In this embodiment of the present invention, the first mask and the second mask are both responsible for a display background and a target application mask. In a switching process, two layers, namely, the first mask and the second mask, are controlled (in a steady state, at most one of the first mask and the second mask can exist), to resolve problems of a division line and slow image rendering during black-and-white switching of the display interface, so that switching timings of elements are consistent during style switching of the entire display interface.

As shown in FIG. 4A and FIG. 4B, an entire image of the display is formed by overlaying a plurality of layers. A punched-hole mask is overlaid on the map layer on the left side, and then the music layer displayed on the right side is overlaid on the punched-hole mask. During black-and-white switching of the display, because map redrawing is slow, the punched-hole mask is first replaced with a full-screen mask to cover a map below, and the music layer is simultaneously switched to a new color. After map redrawing is completed, the full-screen mask is replaced with the punched-hole mask, and a redrawn map is displayed again. The black-and-white switching process is completed.

Step 210: Perform a target operation on the plurality of layers.

In this embodiment of the present invention, the target operation includes: changing a color or redrawing an image. Specifically, changing a color includes changing a color of the display, for example, changing from a night mode to a daytime mode. In addition, a home screen launcher further sends, to another application, an instruction for performing the target operation. It should be noted that, after the home screen launcher responds to the operation of the user, all layers other than the background layer need to change a color or redraw an image. Therefore, the home screen launcher separately sends, to all applications corresponding to images displayed on the display, the instruction for performing the target operation.

For example, the plurality of layers further include a music layer. The electronic device performs the target operation on the music layer.

Step 214: Replace the second mask with the first mask, to enable the display to display the image of the target layer.

Because the target application is loaded slower than another application, the home screen launcher replaces the second mask with the first mask only after the target application completes the target operation. For example, after receiving a message indicating that color change rendering of the map layer is completed, the home screen launcher eliminates simple map information, and then changes the full-screen mask into the punched-hole mask.

Optionally, before step 204, step 202 is further included.

Step 202: Obtain a layout parameter and feature data of the target application.

For example, when the target application is the map application, the feature data includes a TBT card, a three-point earthworm line, and information about top three surrounding locations. When the target application is the energy flow rendered by the complex layer, the feature data includes an energy text and an energy ratio.

The layout parameter of the target application is used to determine a specific display position of the image of the target application on the display. As shown in FIG. 4A and FIG. 4B, the map image of the map application is displayed on the left side of the display, so that the left side of the map layer corresponding to the map application is used to display the map image, and the right side of the map layer is transparent.

It should be noted that the electronic device may be further installed with another application (for example, a music application) with a fast loading speed. The home screen launcher of the electronic device further obtains a layout parameter and image data of the another application, and displays an image of the another application on the display based on the layout parameter and the image data. The layout parameter of the another application is used to determine a specific display position of the image of the another application on the display. As shown in FIG. 4A and FIG. 4B, a music image of the music application is displayed on the right side of the display, so that the right side of a music layer corresponding to the music application is used to draw a map image, and the left side of the map layer is transparent.

It should be noted that the layout parameter of the target application or the another application may be obtained only for the first time. Feature data of the target application needs to be obtained in real time.

Optionally, step 206 and step 208 are further included between step 204 and step 210.

Step 206: Generate a transition layer on the second mask.

The music layer is located above the transition layer.

Step 208: Draw transition information of the target application on the transition layer based on the layout parameter and the feature data.

In the foregoing process, duration of the full-screen mask may be as long as several seconds. When a vehicle speed is high, a driver may travel into a wrong intersection because the driver cannot see important information on the map. To resolve this problem, the feature data of the map application may be first obtained, and then the feature data of the map application is loaded as transition information when the punched-hole mask is switched to the full-screen mask. During this period, the driver can still see the feature data of the map application, and therefore no important information is missed, that is, there is no information blind spot.

In this embodiment of the present invention, the feature data of the target application is obtained, and the target application is rendered in phases, so that important information is not lost during image redrawing.

For example, when the target application is the map application, the feature data includes the TBT card, the three-point earthworm line, and the information about top three surrounding locations. Information included in the TBT card in map navigation usually includes a steering direction, a steering distance, a road name, and the like. Map information in the map navigation is complex. The TBT card further includes information about surrounding locations in addition to earthworm lines (routes). For the driver, the important information is a corner turning moment and the most important surrounding locations. Therefore, feature information of the map application further includes the three-point earthworm line and the information about top three surrounding locations.

For example, the target application includes the energy flow rendered by the complex layer. As shown in FIG. 9A to FIG. 9C, the transition information includes simple energy information.

The music layer is located above the transition layer.

Optionally, step 212 is further included between step 210 and step 214.

Step 212: Eliminate the transition layer and the transition information after the target operation performed on the target layer is completed.

After waiting for the target application to complete the target operation, the home screen launcher first eliminates the transition layer and the transition information, to prevent the transition layer from covering the icon layer after the target operation is completed.

It should be noted that steps 204, 206, and 110 may be performed synchronously.

According to the display method provided in this embodiment of the present invention, because a time for switching between the first mask and the second mask is far less than a time for switching a style of the target layer, color change timings of areas are consistent during style switching of the display, thereby improving user visual experience.

In the technical solutions of the display method provided in this embodiment of the present invention, the first mask on the plurality of layers of the home screen is replaced with the second mask in response to the operation of the user. The second mask is used to block the target layer on which the image of the target application is displayed, to enable the home screen not to display the image of the target layer. The target operation is performed on the target layer. After the target operation performed on the target layer is completed, the second mask is replaced with the first mask, to enable the home screen to display the image of the target layer. In this way, color change timings of areas are consistent during style switching of the display, thereby improving user visual experience.

FIG. 12 is a diagram of a structure of an electronic device according to an embodiment of the present invention. It should be understood that the electronic device 400 can perform steps of the display method shown in FIG. 10. To avoid repetition, details are not described herein again. The electronic device 400 includes a processing unit 401 and a transceiver unit 402.

The processing unit 401 is configured to: replace a first mask on a plurality of layers of a display with a second mask in response to an operation of a user, where the second mask is used to block a target layer on which an image of a target application is displayed, to enable the display not to display an image of the target layer; perform a target operation on the plurality of layers; and replace the second mask with the first mask after the target operation on the target layer is completed, to enable the display to display the image of the target layer.

Optionally, the first mask includes a punched-hole mask, and the second mask includes a full-screen mask.

Optionally, a position of a hole in the punched-hole mask corresponds to a position of the image of the target layer, to enable the image of the target layer to be displayed on the display through the hole.

Optionally, the transceiver unit 402 is configured to obtain a layout parameter and feature data of the target application.

Optionally, the processing unit 401 is further configured to: generate a transition layer on the second mask; and draw transition information of the target application on the transition layer based on the layout parameter and the feature data.

Optionally, the processing unit 401 is further configured to eliminate the transition layer and the transition information.

Optionally, the target application includes a map application.

Optionally, the feature data includes a TBT card, a three-point earthworm line, and information about top three surrounding locations.

Optionally, the transition information includes simple map information.

Optionally, the target application includes an energy flow rendered by a complex layer.

Optionally, the feature data includes an energy text and an energy ratio.

Optionally, the transition information includes simple energy information.

Optionally, the plurality of layers further include a music layer.

The music layer is located above the target layer, and the first mask or the second mask is located between the target layer and the music layer.

Optionally, the processing unit 401 is further configured to perform the target operation on the music layer.

Optionally, the music layer is located above the transition layer.

Optionally, the target operation includes: changing a color or redrawing an image.

An embodiment of this application provides a vehicle. The vehicle includes a main control device and a display. The main control device includes a processor and a memory. The memory is configured to store a computer program, and the computer program includes program instructions, and when the processor runs the program instructions, the main control device performs functions/steps in the foregoing method embodiment.

An embodiment of this application provides an electronic device. The electronic device may be a terminal device or a circuit device built into the terminal device. The electronic device may be configured to perform functions/steps in the foregoing method embodiment.

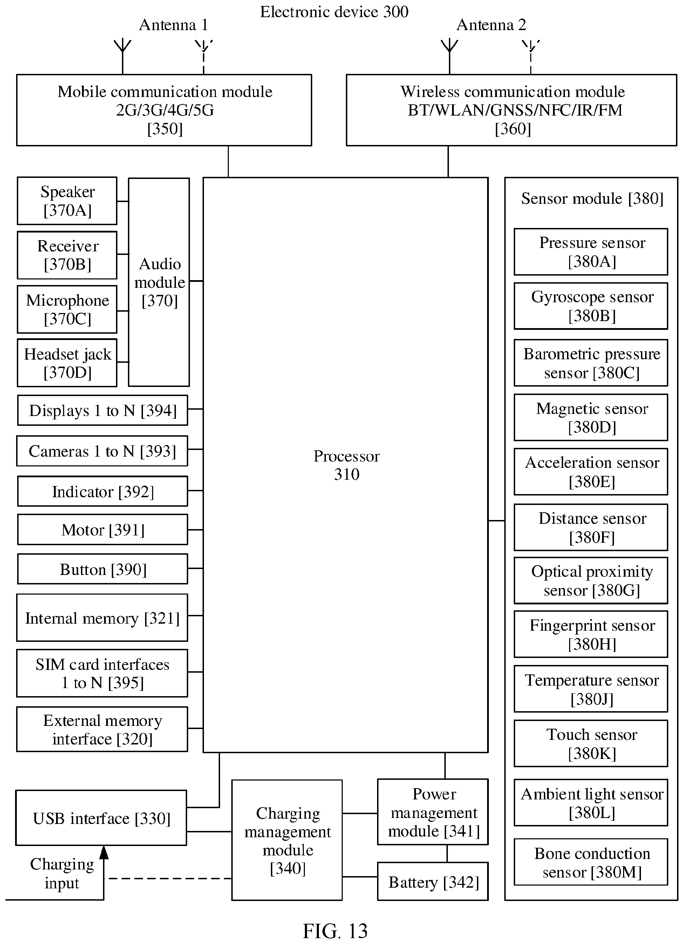

FIG. 13 is a diagram of a structure of an electronic device 300 according to an embodiment of the present invention. The electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that the structure shown in this embodiment of this application does not constitute a specific limitation on the electronic device 300. In some other embodiments of this application, the electronic device 300 may include more or fewer components than those shown in the figure, or some components may be combined, or some components may be split, or different component arrangements may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may further be disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 300.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communication module 360 through the I2S interface, to implement a function of answering a call by using a Bluetooth headset.

The PCM interface may also be used to perform audio communication, and sample, quantize, and code an analog signal. In some embodiments, the audio module 370 may be coupled to the wireless communication module 360 through the PCM bus interface. In some embodiments, the audio module 370 may alternatively transmit an audio signal to the wireless communication module 360 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect to the processor 310 and the wireless communication module 360. For example, the processor 310 communicates with a Bluetooth module in the wireless communication module 360 through the UART interface, to implement a Bluetooth function. In some embodiments, the audio module 370 may transmit an audio signal to the wireless communication module 360 through the UART interface, to implement a function of playing music by using a Bluetooth headset.

The MIPI interface may be configured to connect to the processor 310 and a peripheral component such as the display 394 and the camera 393. The MIPI interface includes a camera serial interface (camera serial interface, CSI), a display serial interface (display serial interface, DSI), and the like. In some embodiments, the processor 310 communicates with the camera 393 through the CSI, to implement a photographing function of the electronic device 300. The processor 310 communicates with the display 394 through the DSI, to implement a display function of the electronic device 300.

The GPIO interface may be configured by software. The GPIO interface may be configured as a control signal or a data signal. In some embodiments, the GPIO interface may be configured to connect to the processor 310 and the camera 393, the display 394, the wireless communication module 360, the audio module 370, the sensor module 380, and the like. The GPIO interface may alternatively be configured as an I2C interface, an I2S interface, a UART interface, an MIPI interface, or the like.

The USB interface 330 is an interface that conforms to a USB standard specification, and may be specifically a mini USB interface, a micro USB interface, a USB Type-C interface, or the like. The USB interface 330 may be configured to connect to the charger to charge the electronic device 300, or may be configured to transmit data between the electronic device 300 and a peripheral device, or may be configured to connect to a headset for playing audio by using the headset. The interface may further be configured to connect to another electronic device such as an AR device.

It can be understood that an interface connection relationship between modules illustrated in this embodiment of this application is merely an example for description, and does not constitute a limitation on the structure of the electronic device 300. In some other embodiments of this application, different interface connection manners in the foregoing embodiment or a combination of a plurality of interface connection manners may alternatively be used for the electronic device 300.

The charging management module 340 is configured to receive a charging input from the charger. The charger may be a wireless charger or a wired charger. In some embodiments of wired charging, the charging management module 340 may receive a charging input of the wired charger through the USB interface 330. In some embodiments of wireless charging, the charging management module 340 may receive a wireless charging input through a wireless charging coil of the electronic device 300. The charging management module 340 supplies power to the electronic device by using the power management module 341 while charging the battery 342.

The power management module 341 is configured to connect to the battery 342, the charging management module 340, and the processor 310. The power management module 341 receives an input from the battery 342 and/or the charging management module 340, and supplies power to the processor 310, the internal memory 321, the display 394, the camera 393, the wireless communication module 360, and the like. The power management module 341 may further be configured to monitor parameters such as a battery capacity, a battery cycle count, and a battery health status (electric leakage or impedance). In some other embodiments, the power management module 341 may also be disposed in the processor 310. In some other embodiments, the power management module 341 and the charging management module 340 may also be disposed in a same component.

A wireless communication function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna in the electronic device 300 may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a solution, applied to the electronic device 300, to wireless communication including 2G, 3G, 4G, 5G, and the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same component as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or a video by using the display 394. In some embodiments, the modem processor may be an independent component. In some other embodiments, the modem processor may be independent of the processor 310, and is disposed in a same component as the mobile communication module 350 or another functional module.

The wireless communication module 360 may provide a solution, applied to the electronic device 300, to wireless communication including a wireless local area network (wireless local area network, WLAN) (such as, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 360 may be one or more components integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 of the electronic device 300 is coupled to the mobile communication module 350, and the antenna 2 is coupled to the wireless communication module 360, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 300 may implement a display function by using the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 300 may include one or N displays 394, where N is a positive integer greater than 1.

The electronic device 300 may implement a photographing function by using the ISP, the camera 393, the video codec, the GPU, the display 394, the application processor, or the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The digital signal processor is configured to process a digital signal, and may process another digital signal in addition to a digital image signal. For example, when the electronic device 300 selects a frequency, the digital signal processor is configured to perform Fourier transform and the like on frequency energy.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 300 may be implemented by using the NPU, for example, image recognition, facial recognition, speech recognition, and text understanding.

The external memory interface 320 may be configured to connect to an external memory card, for example, a micro SD card, to extend a storage capability of the electronic device 300. The external memory card communicates with the processor 310 through the external memory interface 320, to implement a data storage function. For example, files such as music and videos are stored in the external storage card.

The internal memory 321 may be configured to store computer-executable program code. The executable program code includes instructions. The internal memory 321 may include a program storage area and a data storage area. The program storage area may store an operating system, an application required by at least one function (for example, a voice playing function or an image playing function), and the like. The data storage area may store data (for example, audio data and a phone book) and the like created when the electronic device 300 is used. In addition, the internal memory 321 may include a high-speed random access memory, and may further include a nonvolatile memory, for example, at least one magnetic disk storage device, a flash memory, or a universal flash storage (universal flash storage, UFS). The processor 310 performs various function applications and data processing of the electronic device 300 by running the instructions stored in the internal memory 321 and/or instructions stored in a memory provided in the processor.

The electronic device 300 may implement audio functions, for example, music playing and recording, by using the audio module 370, the speaker 370A, the receiver 370B, the microphone 370C, the headset jack 370D, the application processor, and the like.

The audio module 370 is configured to convert digital audio information into an analog audio signal for output, and is also configured to convert an analog audio input into a digital audio signal. The audio module 370 may further be configured to encode and decode an audio signal. In some embodiments, the audio module 370 may be disposed in the processor 310, or some functional modules of the audio module 370 are disposed in the processor 310.

The speaker 370A, also referred to as a "loudspeaker", is configured to convert an audio electrical signal into a sound signal. The electronic device 300 may listen to music or answer a call in a hands-free mode through the speaker 370A.

The receiver 370B, also referred to as an "earpiece", is configured to convert an audio electrical signal into a sound signal. When a call is answered or voice information is received by using the electronic device 300, the receiver 370B may be put close to a human ear to listen to a voice.

The microphone 370C, also referred to as a "mike" or a "mic", is configured to convert a sound signal into an electrical signal. When making a call or sending voice information, the user may make a sound near the microphone 370C through the mouth of a user, to enter a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may alternatively be disposed in the electronic device 300, to collect a sound signal, implement noise reduction, identify a sound source, implement a directional recording function, and the like.

The headset jack 370D is configured to connect to a wired headset. The headset jack 370D may be a USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 380Ais configured to sense a pressure signal, and may convert the pressure signal into an electrical signal. In some embodiments, the pressure sensor 380A may be disposed on the display 394. There are a plurality of types of pressure sensors 380A, such as a resistive pressure sensor, an inductive pressure sensor, and a capacitive pressure sensor.

The capacitive pressure sensor may include at least two parallel plates made of conductive materials. When force is applied to the pressure sensor 380A, capacitance between electrodes changes. The electronic device 300 determines pressure strength based on the change of the capacitance. When a touch operation is performed on the display 394, the electronic device 300 detects strength of the touch operation by using the pressure sensor 380A. The electronic device 300 may also calculate a touch position based on a detection signal of the pressure sensor 380A. In some embodiments, touch operations that are performed in a same touch position but have different touch operation strength may correspond to different operation instructions. For example, when a touch operation whose touch operation strength is less than a first pressure threshold is performed on an SMS message application icon, an instruction for viewing an SMS message is performed. When a touch operation whose touch operation strength is greater than or equal to the first pressure threshold is performed on the SMS message application icon, an instruction for creating a new SMS message is performed.

The gyroscope sensor 380B may be configured to determine a motion posture of the electronic device 300. In some embodiments, angular velocities of the electronic device 300 around three axes (namely, x, y, and z) may be determined by using the gyroscope sensor 380B. The gyroscope sensor 380B may be configured to implement image stabilization during photographing. For example, when the shutter is pressed, the gyroscope sensor 380B detects an angle at which the electronic device 300 jitters, calculates, based on the angle, a distance for which a lens module needs to compensate, and allows the lens to cancel the jitter of the electronic device 300 through reverse motion, to implement image stabilization. The gyroscope sensor 380B may also be used in scenarios such as navigation and a motion-sensing game.

The barometric pressure sensor 380C is configured to measure barometric pressure. In some embodiments, the electronic device 300 calculates an altitude based on a barometric pressure value measured by the barometric pressure sensor 380C, to assist positioning and navigation.

The magnetic sensor 380D includes a Hall effect sensor. The electronic device 300 may detect opening or closing of a flip cover by using the magnetic sensor 380D. In some embodiments, when the electronic device 300 is a flip phone, the electronic device 300 may detect opening and closing of a flip cover based on the magnetic sensor 380D. Further, a feature such as automatic unlocking of the flip cover is set based on a detected opening or closing state of the leather case or a detected opening or closing state of the flip cover.

The acceleration sensor 380E may detect magnitudes of accelerations of the electronic device 300 in various directions (usually on three axes). When the electronic device 300 is stationary, the acceleration sensor 380E may detect a magnitude and a direction of gravity. The acceleration sensor 380E may further be configured to identify a posture of the electronic device, and is used in an application such as switching between a landscape mode and a portrait mode or a pedometer.

The distance sensor 380F is configured to measure a distance. The electronic device 300 may measure a distance in an infrared manner or a laser manner. In some embodiments, in a photographing scenario, the electronic device 300 may measure a distance by using the distance sensor 380F, to implement quick focusing.

The optical proximity sensor 380G may include, for example, a light-emitting diode (LED) and an optical detector, for example, a photodiode. The light-emitting diode may be an infrared light-emitting diode. The electronic device 300 emits infrared light by using the light-emitting diode. The electronic device 300 detects infrared reflected light from a nearby object by using the photodiode. When sufficient reflected light is detected, the electronic device 300 may determine that there is an object near the electronic device 300. When insufficient reflected light is detected, the electronic device 300 may determine that there is no object near the electronic device 300. The electronic device 300 may detect, by using the optical proximity sensor 380G, that the user holds the electronic device 300 close to an ear to make a call, to automatically perform screen-off for power saving. The optical proximity sensor 380G may also be used in a smart cover mode or a pocket mode to automatically perform screen unlocking or locking.

The ambient light sensor 380L is configured to sense ambient light brightness. The electronic device 300 may adaptively adjust brightness of the display 394 based on the sensed ambient light brightness. The ambient light sensor 380L may also be configured to automatically adjust white balance during photographing. The ambient light sensor 380L may further cooperate with the optical proximity sensor 380G to detect whether the electronic device 300 is in a pocket, to avoid an accidental touch.

The fingerprint sensor 380H is configured to collect a fingerprint. The electronic device 300 may use a feature of the collected fingerprint to implement fingerprint-based unlocking, application lock access, fingerprint-based photographing, fingerprint-based call answering, and the like.

The temperature sensor 380J is configured to detect a temperature. In some embodiments, the electronic device 300 executes a temperature processing policy by using the temperature detected by the temperature sensor 380J. For example, when the temperature reported by the temperature sensor 380J exceeds a threshold, the electronic device 300 lowers performance of a processor near the temperature sensor 380J, to reduce power consumption for thermal protection. In some other embodiments, when the temperature is less than another threshold, the electronic device 300 heats the battery 342 to prevent the electronic device 300 from being shut down abnormally because of a low temperature. In some other embodiments, when the temperature is lower than still another threshold, the electronic device 300 boosts an output voltage of the battery 342 to avoid abnormal shutdown caused by a low temperature.

The touch sensor 380K is also referred to as a "touch component". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor to determine a type of the touch event. A visual output related to the touch operation may be provided on the display 394. In some other embodiments, the touch sensor 380K may alternatively be disposed on a surface of the electronic device 300 at a position different from that of the display 394.

The bone conduction sensor 380M may obtain a vibration signal. In some embodiments, the bone conduction sensor 380M may obtain a vibration signal of a vibration bone of a human vocal-cord part. The bone conduction sensor 380M may also be in contact with a human pulse, to receive a blood pressure beating signal. In some embodiments, the bone conduction sensor 380M may alternatively be disposed in the headset, to obtain a bone conduction headset. The audio module 370 may obtain a voice signal through parsing based on the vibration signal that is of the vibration bone of the vocal-cord part and that is obtained by the bone conduction sensor 380M, to implement a voice function. The application processor may parse heart rate information based on the blood pressure beating signal obtained by the bone conduction sensor 380M, to implement a heart rate detection function.

The button 390 includes a power button, a volume button, and the like. The button 390 may be a mechanical button, or may be a touch button. The electronic device 300 may receive a button input, and generate a button signal input related to a user setting and function control of the electronic device 300.

The motor 391 may generate a vibration prompt. The motor 391 may be configured to provide an incoming call vibration prompt and touch vibration feedback. For example, touch operations performed on different applications (for example, photographing and audio playing) may correspond to different vibration feedback effects. For touch operations performed on different areas of the display 394, the motor 391 may also correspond to different vibration feedback effects. Different application scenarios (for example, a time reminder, information receiving, an alarm clock, and a game) may also correspond to different vibration feedback effects. A touch vibration feedback effect may further be customized.

The indicator 392 may be an indicator light, and may be configured to indicate a charging status and a power change, or may be configured to indicate a message, a missed call, a notification, and the like.

The SIM card interface 395 is configured to connect to a SIM card. The SIM card may be inserted into the SIM card interface 395 or removed from the SIM card interface 395, to implement contact with or separation from the electronic device 300. The electronic device 300 may support one or N SIM card interfaces, where N is a positive integer greater than 1. The SIM card interface 395 may support nano SIM cards, micro SIM cards, SIM cards, and the like. A plurality of cards may be simultaneously inserted into a same SIM card interface 395. The plurality of cards may be of a same type or different types. The SIM card interface 395 is also compatible with different types of SIM cards. The SIM card interface 395 is also compatible with an external memory card. The electronic device 300 interacts with a network through the SIM card to implement functions such as calls and data communication. In some embodiments, the electronic device 300 uses an eSIM, namely, an embedded SIM card. The eSIM card may be embedded in the electronic device 300, and cannot be separated from the electronic device 300.

A software system of the electronic device 300 may use a layered architecture, an event-driven architecture, a microkernel architecture, a micro service architecture, or a cloud architecture. In this embodiment of the present invention, an Android system of a layered architecture is used as an example for describing a software structure of the electronic device 300.

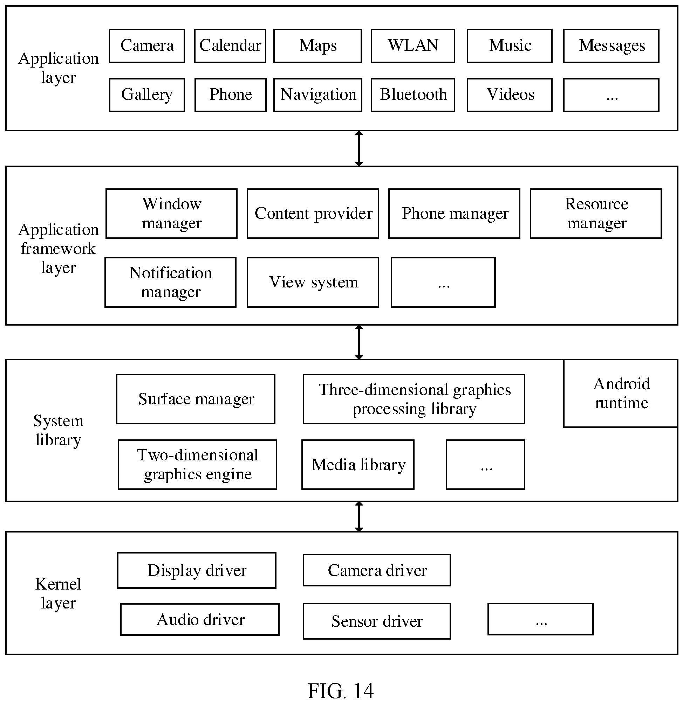

FIG. 14 is a block diagram of the software structure of the electronic device 300 according to this embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 14, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 14, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function for the electronic device 300, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is prompted in the status bar, an alert sound is played, the electronic device vibrates, or the indicator light flashes.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, as well as static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 300 with reference to a capture photographing scenario.

When the touch sensor 380K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a tap operation, and a control corresponding to the tap operation is a control of an icon of a camera application. The camera application invokes an interface at the application framework layer to enable the camera application, then enables a camera driver by invoking the kernel layer, and captures a static image or a video by using the camera 393.

An embodiment of this application provides a computer-readable storage medium. The computer-readable storage medium stores instructions. When the instructions are run on a terminal device, the terminal device is enabled to perform the functions/steps in the foregoing method embodiments.

An embodiment of this application further provides a computer program product including instructions. When the computer program product runs on a computer or any at least one processor, the computer is enabled to perform the functions/steps in the foregoing method embodiments.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following" and similar expressions mean any combination of these terms, including any combination of single or plural terms. For example, at least one of a, b, and c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing an electronic device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. The protection scope of this application shall be subject to the protection scope of the claims.

## Claims

1. A display method, wherein the method comprises:
replacing a first mask on a plurality of layers of a display with a second mask in response to an operation of a user, wherein the second mask is used to block a target layer on which an image of a target application is displayed, to enable the display not to display an image of the target layer;
performing a target operation on the plurality of layers; and
replacing the second mask with the first mask after the target operation performed on the target layer is completed, to enable the display to display the image of the target layer.

2. The method according to claim 1, wherein the first mask comprises a punched-hole mask and the second mask comprises a full-screen mask.

3. The method according to claim 2, wherein a position of a hole in the punched-hole mask corresponds to a position of the image of the target layer, to enable the image of the target layer to be displayed on the display through the hole.

4. The method according to claim 1, wherein before the replacing a first mask on a plurality of layers of a display with a second mask in response to an operation of a user, the method further comprises:
obtaining a layout parameter and feature data of the target application.

5. The method according to claim 4, wherein before the replacing the second mask with the first mask after the target operation performed on the target layer is completed, the method further comprises:
generating a transition layer on the second mask; and
drawing transition information of the target application on the transition layer based on the layout parameter and the feature data.

6. The method according to claim 5, wherein after the target operation performed on the target layer is completed, the method further comprises:
eliminating the transition layer and the transition information.

7. The method according to claim 1, wherein the target application comprises a map application.

8. The method according to claim 4, wherein the feature data comprises a TBT card, a three-point earthworm line, and information about top three surrounding locations.

9. The method according to claim 5, wherein the transition information comprises simple map information.

10. The method according to claim 1, wherein the target application comprises an energy flow rendered by a complex layer.

11. The method according to claim 4, wherein the feature data comprises an energy text and an energy ratio.

12. The method according to claim 5, wherein the transition information comprises simple energy information.

13. The method according to any one of claims 1 to 12, wherein the plurality of layers further comprise a music layer; and
the music layer is located above the target layer, and the first mask or the second mask is located between the target layer and the music layer.

14. The method according to claim 13, wherein the method further comprises:
performing the target operation on the music layer.

15. The method according to claim 13, wherein the music layer is located above the transition layer.

16. The method according to claim 1, wherein the target operation comprises: changing a color or redrawing an image.

17. A vehicle, wherein the vehicle comprises a main control device and a display, the main control device comprises a processor and a memory, the memory is configured to store a computer program, the computer program comprises program instructions, and when the processor runs the program instructions, the main control device is enabled to perform the steps of the method according to any one of claims 1 to 16.

18. An electronic device, comprising a display, a processor, and a memory, wherein the memory is configured to store a computer program, the computer program comprises program instructions, and when the processor runs the program instructions, the electronic device is enabled to perform the steps of the method according to any one of claims 1 to 16.

19. A computer-readable storage medium, wherein the computer-readable storage medium stores a computer program, the computer program comprises program instructions, and when the program requests to be run by a computer, the computer is enabled to perform the method according to any one of claims 1 to 16.
